# EUROPEAN PATENT APPLICATION

(11) **EP 4 556 447 A1**
(43) Date of publication of application: **21.05.2025**
(21) Application number: 23865663.1
(22) Date of filing: 14.06.2023
(51) Int. Cl.: C03C 15/00, C03C 23/00, H05K 5/03, G09F 9/30, B01J 47/00, B01D 39/16, C03C 3/00

(54) **ELECTRONIC DEVICE INCLUDING GLASS MEMBER AND METHOD FOR MANUFACTURING GLASS MEMBER**

(30) Priority: 14.09.2022 KR 20220115573; 11.10.2022 KR 20220129900
(71) Applicant: Samsung Electronics Co., Ltd., Suwon-si, Gyeonggi-do 16677 (KR)
(72) Inventor: BAE, Jaehyun, Suwon-si Gyeonggi-do 16677 (KR); MOON, Youngmin, Suwon-si Gyeonggi-do 16677 (KR); LEE, Changsu, Suwon-si Gyeonggi-do 16677 (KR); JEON, Jonggyu, Suwon-si Gyeonggi-do 16677 (KR)
(74) Representative: Gulde & Partner
(86) International application number: PCT/KR2023/008161
(87) International publication number: WO 2024/058359

(57) **Abstract**

An electronic device according to one embodiment may comprise a display and a glass member disposed on a surface of the electronic device including the display. A sludge layer caused by a by-product attached to the surface of the glass member during an etching process may be cleaned with an anionic cleaning solution. The anionic cleaning solution may be a solution in which cations have been filtered or removed.

## Description

### [Technical Field]

The disclosure relate to an electronic device including a glass member and a method for manufacturing the glass member.

### [Background Art]

An electronic device may include a user interface for providing information to the user or entry of information by the user. The user interface may include, e.g., a display visually providing information to the user. The display may include, for example, a touch panel for receiving information by the user's touch.

The electronic device may cover the display or the surface including the display with a glass member such as a reinforced glass. The glass member may protect the display or the surface of the electronic device from external impact. In particular, the glass member covering the display may enhance transmittance, prevent glare or diffuse reflection, protecting the user's vision or enhancing the image quality of the displayed image.

The glass member may undergo an etching process to obtain a desired thickness and shape when manufactured. The etching process may come with a chemical reaction. The chemical reaction in the etching process may cause by-products to be attached to the surface of the glass member. The by-products attached to the glass member may deteriorate the impact resistance for withstanding external impact or cause transmittance, glare or diffuse reflection.

### [DETAILED DESCRIPTION OF THE INVENTION]

### [Technical Solution]

Provided are a cleaning method for removing a sludge layer due to a by-product attached to the surface in the glass member covering or to cover the display or the exterior including the display and an electronic device having the sludge layer-removed glass member.

An embodiment of the disclosure may configure a window of a display device by applying coating portions with different hardnesses to secure flexibility while enhancing the impact resistance of a bending portion vulnerable to external impact in a flexible display device.

According to an embodiment, there may be implemented an electronic device capable of safely protecting the display panel from external impact by applying a glass member with enhanced surface roughness and impact resistance by using a cleaning solution containing anions without damage to the glass surface while removing the sludge layer attached or stacked on the surface of the glass member by a by-product generated in a chemical etching process.

An electronic device according to an embodiment may include a glass member disposed on a display and a surface of the electronic device including the display. In the glass member, the sludge layer due to a by-product attached to the surface in the etching process may be cleaned by a cleaning solution. The anionic cleaning solution may be a solution where cations have been filtered or removed.

A method for manufacturing a glass member according to an embodiment may include etching the glass member using an etching solution. The method for manufacturing the glass member may include rinsing the etching solution remaining on a surface of the glass member. The method for manufacturing the glass member may include cleaning a sludge layer including a by-product due to etching, attached to the surface of the glass member by dipping the glass member in the anionic cleaning solution where the cations have been filtered or removed.

According to an embodiment of the disclosure, it is possible to enhance impact resistance capable of withstanding external impact, protect vision from transmittance, glare, or diffuse reflection, or enhance the image quality of the displayed image by removing the sludge layer due to the by-product attached to the glass member covering the display of the display or the surface including the display.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [BRIEF DESCRIPTION OF THE DRAWINGS]

FIG. 1 is a front perspective view illustrating a mobile electronic device according to an embodiment;
FIG. 2 is a rear perspective view illustrating the electronic device of FIG. 1;
FIG. 3 is an exploded perspective view illustrating the electronic device of FIG. 1;
FIG. 4 is a view illustrating a stacked structure of a display according to an embodiment;
FIG. 5 is a view illustrating that a sludge layer attached to a glass member is removed according to an embodiment;
FIG. 6 is a view illustrating a structure of a cleaning device according to an embodiment;
FIG. 7 is a flowchart illustrating a process of processing a glass member in a glass member processing system according to an embodiment;
FIG. 8 is a graph illustrating enhanced surface roughness of a glass member according to an embodiment;
FIG. 9 is a graph illustrating enhanced impact resistance performance of a glass member according to an embodiment;
FIGS. 10A and 10B are perspective views illustrating a flexible electronic device according to an embodiment;
FIG. 11 is an exploded perspective view illustrating a flexible electronic device according to an embodiment;
FIG. 12 is a view illustrating that a sludge layer attached to a glass member applied to FIG. 10A is removed according to an embodiment;
FIG. 13 is a perspective view illustrating a glass member applied to FIG. 10A;
FIG. 14 is a cross-sectional view schematically illustrating portion M of FIG. 13, in which a sludge layer attached to a glass member is removed; and
FIG. 15 is a block diagram illustrating an electronic device in a network environment according to various embodiments.

Reference may be made to the accompanying drawings in the following description, and specific examples that may be practiced are shown as examples within the drawings. Other examples may be utilized and structural changes may be made without departing from the scope of the various examples.

### [Mode for Carrying out the Invention]

Hereinafter, example embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

Hereinafter, embodiments of the present disclosure are described with reference to the accompanying drawings.

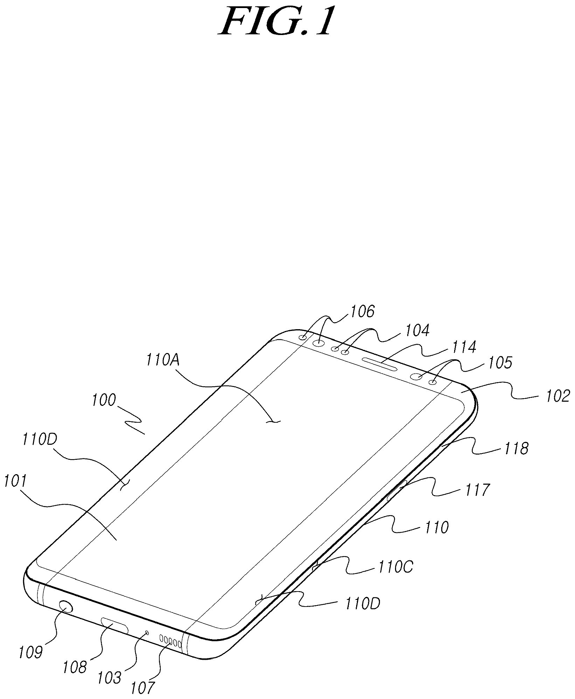

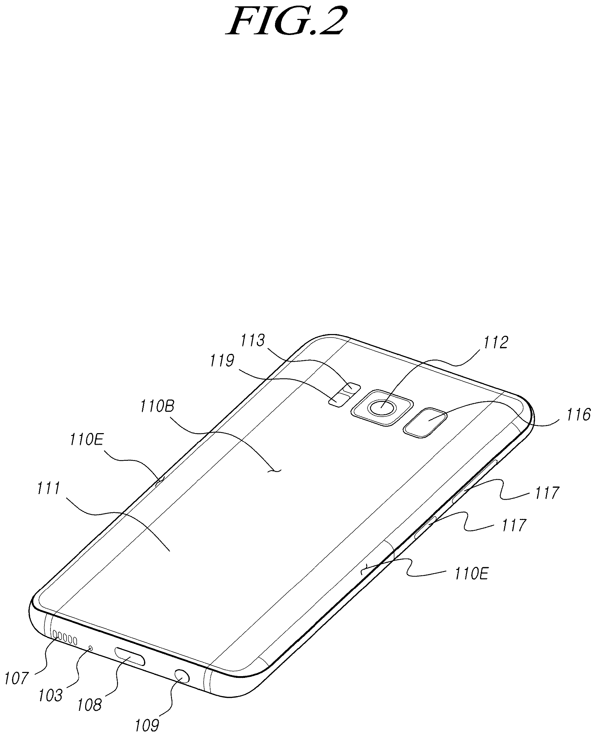

Referring to FIGS. 1 and 2, according to an embodiment, an electronic device 100 may include a housing 110 with a first (or front) surface 110A, a second (or rear) surface 110B, and a side surface 110C surrounding a space between the first surface 110A and the second surface 110B. According to another embodiment, the housing may be a structure forming part of the first surface 110A, the second surface 110B, and the side surface 110C of FIG. 1. According to an embodiment, at least part of the first surface 110A may have a substantially transparent front plate 102 (e.g., a glass plate or polymer plate including various coat layers). The second surface 110B may be formed of a substantially opaque rear plate 111. The rear plate 111 may be formed of, e.g., laminated or colored glass, ceramic, polymer, metal (e.g., aluminum, stainless steel (STS), or magnesium), or a combination of at least two thereof. The side surface 110C may be formed by a side bezel structure (or a "side member") 118 that couples to the front plate 102 and the rear plate 111 and includes a metal and/or polymer. According to an embodiment, the rear plate 111 and the side bezel plate 118 may be integrally formed together and include the same material (e.g., a metal, such as aluminum).

In the embodiment illustrated in FIGS. 1 and 2, the front plate 102 may include two first areas 110D, which seamlessly and bendingly extend from the first surface 110A to the rear plate 111, on both the long edges of the front plate 102. In the illustrated embodiment (see FIG. 2), the rear plate 111 has two second areas 110E, which are bent, and seamlessly extend, from the second surface 110B toward the front plate 102, at two opposite long edge ends. In an embodiment, the front plate 102 (or the rear plate 111) may include only one of the first areas 110D (or the second areas 110E). In another embodiment, some of the first areas 110D or the second areas 110E may not be included. According to an embodiment, at side view of the electronic device 100, the side bezel structure 118 may have a first thickness (or width) for sides that do not have the first areas 110D or the second areas 110E and a second thickness, which is smaller than the first thickness, for sides that have the first areas 110D or the second areas 110E. In an embodiment, the first areas 110D or second areas 110E may be formed to be flat to, together the first surface 110A or second surface 110B, form substantially one flat surface without bending.

According to an embodiment, the electronic device 100 may include at least one or more of a display 101, audio modules 103, 107, and 114, sensor modules 104, 116, and 119, camera modules 105, 112, and 113, key input devices 117, a light emitting device 106, and connector holes 108 and 109. According to an embodiment, the electronic device 100 may exclude at least one (e.g., the key input device 117 or the light emitting device 106) of the components or may add other components.

The display 101 may be exposed through a significant portion of the front plate 102. In another embodiment, at least a portion of the display 101 may be exposed through the front plate 102 forming the first surface 110A and the first areas 110D of the side surface 110C. According to an embodiment, the edge of the display 101 may be formed to be substantially in the same shape as a shape of an adjacent outer edge of the front plate 102. According to an embodiment, the interval between the outer edge of the display 101 and the outer edge of the front plate 102 may remain substantially even to provide a larger area of exposure the display 101.

According to an embodiment, the screen display area of the display 101 may have a recess or opening in a portion thereof, and at least one or more of the audio module 114, sensor module 104, camera module 105, and light emitting device 106 may be aligned with the recess or opening. According to an embodiment, at least one or more of the audio module 114, sensor module 104, camera module 105, fingerprint sensor 116, and light emitting device 106 may be included on the rear surface of the screen display area of the display 101. According to an embodiment, the display 101 may be disposed to be coupled with, or adjacent, a touch detecting circuit, a pressure sensor capable of measuring the strength (pressure) of touches, and/or a digitizer for detecting a magnetic field-type stylus pen. In another embodiment, at least a portion of the sensor modules 104 and 119, and/or at least a portion of the key input device 117 may be disposed in the first areas 110D and/or the second areas 110E.

The audio modules 103, 107, and 114 may include a microphone hole 103 and speaker holes 107 and 114. A microphone for acquiring external sounds may be disposed in the microphone hole 103. In another embodiment, a plurality of microphones may be disposed to detect the direction of the sound. The speaker holes 107 and 114 may include an external speaker hole 107 and a phone receiver hole 114. According to an embodiment, the speaker holes 107 and 114 and the microphone hole 103 may be implemented as a single hole, or speakers may be rested without the speaker holes 107 and 114 (e.g., piezo speakers).

The sensor modules 104, 116, and 119 may generate an electrical signal or data value corresponding to an internal operating state or external environmental state of the electronic device 100. The sensor modules 104, 116, and 119 may include a first sensor module 104 (e.g., a proximity sensor) and/or a second sensor module (e.g., a fingerprint sensor) disposed on the first surface 110A of the housing 110 and/or a third sensor module 119 (e.g., a heart-rate monitor (HRM) sensor) and/or a fourth sensor module 116 (e.g., a fingerprint sensor) disposed on the second surface 110B of the housing 110. The fingerprint sensor may be disposed on the second surface 110B as well as on the first surface 110A (e.g., the display 101) of the housing 110. The electronic device 100 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 104.

The camera modules 105, 112, and 113 may include a first camera device 105 disposed on the first surface 110A of the electronic device 100, and a second camera device 112 and/or a flash 113 disposed on the second surface 110B. The camera devices 105 and 112 may include one or more lenses, an image sensor, and/or an image signal processor. The flash 113 may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 100.

The key input device 117 may be disposed on the side surface 110C of the housing 110. According to another embodiment, the electronic device 100 may exclude all or some of the above-mentioned key input devices 117 and the excluded key input devices 117 may be implemented in other forms, e.g., as soft keys, on the display 101. According to an embodiment, the key input device may include the sensor module 116 disposed on the second surface 110B of the housing 110.

The light emitting device 106 may be disposed on, e.g., the first surface 110A of the housing 110. The light emitting device 106 may provide, e.g., information about the state of the electronic device 100 in the form of light. According to an embodiment, the light emitting device 106 may provide a light source that interacts with, e.g., the camera module 105. The light emitting device 106 may include, e.g., a light emitting diode (LED), an infrared (IR) LED, or a xenon lamp.

The connector holes 108 and 109 may include a first connector hole 108 for receiving a connector (e.g., a universal serial bus (USB) connector) for transmitting or receiving power and/or data to/from an external electronic device and/or a second connector hole 109 (e.g., an earphone jack) for receiving a connector for transmitting or receiving audio signals to/from the external electronic device.

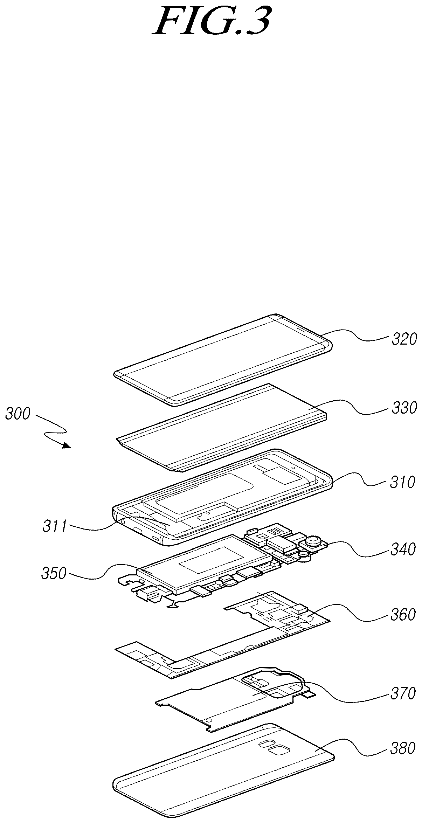

Referring to FIG. 3, an electronic device 300 may include a side bezel structure 310, a first supporting member 311 (e.g., a bracket), a front plate 320, a display 330, a printed circuit board (PCB) 340, a battery 350, a second supporting member 360 (e.g., a rear case), an antenna 370, and a rear plate 380. According to an embodiment, the electronic device 300 may exclude at least one (e.g., the first supporting member 311 or the second supporting member 360) of the components or may add other components. At least one of the components of the electronic device 300 may be the same or similar to at least one of the components of the electronic device 100 of FIG. 1 or 2 and no duplicate description is made below.

The first supporting member 311 may be disposed inside the electronic device 300 to be connected with the side bezel structure 310 or integrated with the side bezel structure 310. The first supporting member 311 may be formed of, e.g., a metal and/or non-metallic material (e.g., polymer). The display 330 may be joined onto one surface of the first supporting member 311, and the printed circuit board 340 may be joined onto the opposite surface of the first supporting member 311. A processor, memory, and/or interface may be mounted on the printed circuit board 340. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 300 with an external electronic device and may include a USB connector, an SD card/multimedia card (MMC) connector, or an audio connector.

The battery 350 may be a device for supplying power to at least one component of the electronic device 300. The battery 189 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 300.

The antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. According to an embodiment, an antenna structure may be formed by a portion or combination of the side bezel structure 310 and/or the first supporting member 311.

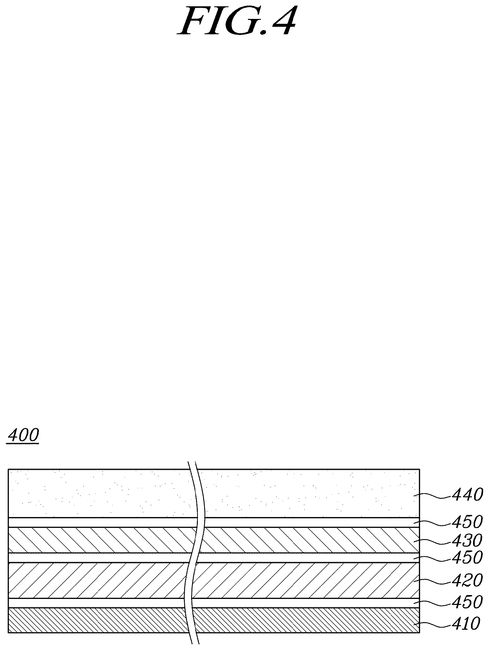

FIG. 4 is a view schematically illustrating a stacked structure of a display 400 according to an embodiment. The stacked structure of the display 400 illustrated in FIG. 4 is exemplary, and embodiments are not limited thereto.

The display 400 illustrated in FIG. 4 is overall identical or similar to the display 101 or 303 of FIG. 1 or FIG. 3. Thus, duplicative description is omitted below.

Referring to FIG. 4, the display 400 may include a display panel 410, an anti-reflection layer 420, an input detection unit 430, or a window layer 440. At least some of the display panel 410, the anti-reflection layer 420, the input detection unit 430, and the window layer 440 may separately include a base layer providing a base surface. For example, the base layer may be formed of a layer such as a synthetic resin film, a composite material film, and a glass substrate. However, without limitations thereto, the base layer may be directly disposed on a base surface provided by another component through a continuous process. The base layer of the display panel 410, the anti-reflection layer 420, the input detection unit 430, or the window layer 440 may be attached to each other through an adhesive member 450. The upper surface of the display panel 410 may be attached to the lower surface of the anti-reflection layer 420 by a first adhesive member. The upper surface of the anti-reflection layer 420 may be attached to the lower surface of the input detection unit 430 by a second adhesive member. The upper surface of the input detection unit 430 may be attached to the lower surface of the window layer 440 by a third adhesive member. The adhesive member 450 may include an adhesive or a pressure sensitive adhesive. The adhesive member 450 may use, e.g., an optically transparent adhesive member.

The display panel 410 may generates an image. The display panel 410 may define a plurality of pixels that transmit or emit light upward on a plane with respect to the drawings. The display panel 410 may be, e.g., one in which organic light emitting elements and an encapsulation film sealing the organic light emitting elements are disposed on a thin film transistor substrate, but embodiments are not limited thereto. For example, the thin film transistor may have a structure in which a gate electrode is disposed on an active layer including low temperature poly silicon.

The anti-reflection layer 420 may be disposed on the display panel 410. The anti-reflection layer 420 may be configured to reduce reflectance by elements of a metal material included in the display panel 410. For example, the anti-reflection layer 420 may include a polarizer and/or a phase retarder. The polarizer and/or the phase retarder may further include a protective film. The polarizer may be, e.g., a film type or a liquid crystal coating type. The phase retarder may be, e.g., a film type or a liquid crystal coating type. Here, the film type may include a stretched synthetic resin film. The liquid crystal coating type may include liquid crystals arranged in a predetermined direction.

According to an embodiment, the anti-reflection layer 420 may include color filters. The color filters may have a predetermined array. The color filters may have an array corresponding to light emitting colors of pixels included in the display panel 410.

According to an embodiment, the anti-reflection layer 420 may include a destructive interference structure. For example, the destructive interference structure may include a first reflective layer and a second reflective layer. In the anti-reflection layer 420, the first reflective layer may be disposed on a layer different from the second reflective layer. The first reflected light reflected from the first reflective layer may destructively interfere with the second reflected light reflected from the second reflected light. The second reflected light reflected from the second reflective layer may destructively interfere with the first reflected light reflected from the first reflective layer. Reflectivity of external light in the anti-reflection layer 420 may be reduced due to destructive interference between the first reflected light and the second reflected light.

The input detection unit 430 may be disposed on the anti-reflection layer 420. The input detection unit 430 may be an element that obtains coordinate information about an external input. For example, the input detection unit 430 may be a touch detection unit that detects the user's touch or a fingerprint detection unit that detects fingerprint information about the user's finger. When the touch input is not provided, the display 400 may not include the input detection unit 430. In this case, the window layer 440 may be disposed on the anti-reflection layer 420.

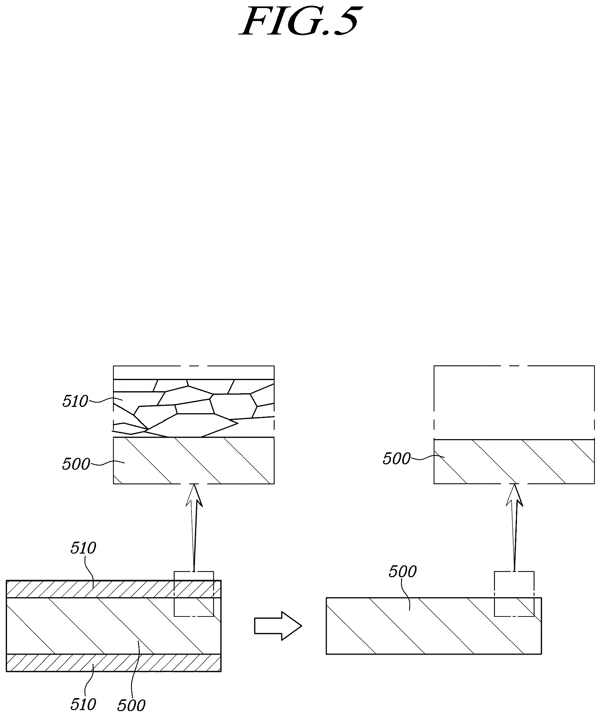

The window layer 440 may be disposed on the input detection unit 430 (or the anti-reflection layer 420). The window layer 440 may include a glass substrate and/or a synthetic resin film. The window layer 440 is not limited to a single layer. The window layer 440 may include two or more films coupled by an adhesive member. The window layer 440 may further include, e.g., a functional coating layer disposed above. Here, the functional coating layer may be a functional coating layer such as an anti-fingerprint layer, an anti-reflection layer, or a hard coating layer. The window layer 440 may include, e.g., a glass member (e.g., the glass member 500 of FIG. 5) such as tempered glass.

FIG. 5 is a view illustrating removing a sludge layer 510 from a glass member 500 according to an embodiment. The drawings illustrated in FIG. 5 are exemplary, and embodiments are not limited thereto.

The glass member 500 illustrated in FIG. 5 may be included in the display 101, 303, or 400 illustrated in FIG. 1, 3, or 4, but is not limited thereto, and may be disposed on the surface of the electronic device 100 or 300 illustrated in FIGS. 1 and 3. For example, the glass member 500 illustrated in FIG. 5 may be included as a glass substrate of the window layer 440 among the components of the display 400 of FIG. 4, but embodiments are not limited thereto, and may be included in another layer (e.g., the anti-reflection layer 420) in the display 400 other than the window layer 440.

According to an embodiment, the process of manufacturing the glass member 500 may include an etching process. The glass member 500 may be partially or entirely etched during the etching process. The etching process may include, for example, chemical etching. For example, a portion (e.g., a surface) of the glass member 500 may be etched using an etching agent or an etching solution (collectively referred to below as an "etching solution"). For example, the etching process may be, e.g., a process of removing the remaining materials while leaving only a necessary portion of the glass member 500.

According to an example, the glass member 500 may be configured by an silicon-oxygen (Si-O) bond. In the chemical etching process, the glass member 500 may be etched by destroying the Si-O bond. For chemical etching, an acidic or alkaline etching solution for destroying the Si-O bond may be used. The glass member 500 may be, e.g., a thin glass having a thickness of 20 µm to 300 µm, but embodiments are not limited thereto. For example, the glass member 500 may be a thin glass having a thickness of 20 um to 40 um.

According to an example, when the glass member 500 is contained in an acidic or alkaline etching solution and chemically etched, by-products may be generated. Some of the by-products generated in the etching process may be attached to or stacked on the surface of the glass member 500 to form a sludge layer 510. The sludge layer 510 may be formed on, e.g., two opposite side surfaces (e.g., an upper surface and a lower surface) of the glass member 500. The thickness of the sludge layer 510 may be, e.g., in the nano meterrange. However, the thickness of the sludge layer 510 may be exaggerated in the drawings for convenience of description. The sludge layer 510 may increase the surface roughness of the glass member 500. The sludge layer 510 capable of increasing the surface roughness may cause the glass member 500 to become vulnerable to an external impact. The sludge layer 510 may have a porous structure as a whole. The porous structure may allow the object to be more easily damaged or broken by an external impact. For example, if an external impact is applied to the portion where the sludge layer 510 is formed, damage such as cracks may occur in the sludge layer 510. The crack of the sludge layer 510 may damage the glass member 500.

According to an example, the by-product forming the sludge layer 510 may have a form in which Si and a hydroxyl group are bonded or a form in which Si and metal cations are bonded, but is not limited thereto.

According to an example, due to the by-product generated in the etching process, the sludge layer 510 formed on the glass member 500 may be cleaned through a cleaning process. For example, the glass member 500 may be dipped into the cleaning solution to remove the sludge layer 510. For example, the cleaning solution (hereinafter referred to as an "anionic cleaning solution") may be a solution in which cations are filtered or removed. The anionic cleaning solution may be a solution in which only anions are present or in which anions are present in a relatively higher proprortion to cations. For example, the anions in the cleaning solution may remove the sludge layer 510 of the glass member 500 by breaking the bond between the Si and the hydroxide group constituting the sludge layer 510 of the glass member 500 or the bond between the Si and the metal cations.

According to an example, the glass member 500 to which the sludge layer 510 is attached or stacked may be dipped in the anionic cleaning solution having a predetermined temperature range to remove the sludge layer 510. The predetermined temperature range may be, e.g., between 25 degrees Celsius and 95 degrees Celsius. For example, the glass member 500, with the sludge layer 510 is attached or stacked, may be dipped in the anionic cleaning solution for a predetermined time or longer to remove the sludge layer 510. The predetermined time may be, e.g., about 10 minutes. For example, the glass member 500, with the sludge layer 510 is attached or stacked, may be dipped in the anionic cleaning solution having a predetermined temperature range for a predetermined time or longer to remove the sludge layer 510. For example, the predetermined temperature range may be between 25 degrees Celsius and 95 degrees Celsius, and the predetermined time may be about 10 minutes. If the glass member 500, with the sludge layer 510 is attached or stacked, is dipped in the anionic cleaning solution in such a way, the sludge layer 510 may be chemically removed from the glass member 500 as illustrated in FIG. 5.

After the etching process, an alkaline solution may be used as the cleaning solution to remove the sludge layer 510 from the glass member 500. When the alkaline solution is used as the cleaning solution, the sludge layer 510 may be removed from the glass member 500, but the surface of the glass member 500 may be damaged, which may increase the surface roughness of the glass member 500. When the surface roughness increases, the impact resistance performance of the glass member 500 may be deteriorated. When the cation-filtered or removed anionic cleaning solution is used instead of an alkaline solution, the sludge layer 510 may be removed from the glass member 500 without damaging the surface of the glass member 500. When the sludge layer 510 is removed using the anionic cleaning solution, the manufacturing cost of the glass member 500 may be reduced. The anionic cleaning solution that may be made by filtering or removing cations may be an eco-friendly solution compared to an alkaline solution.

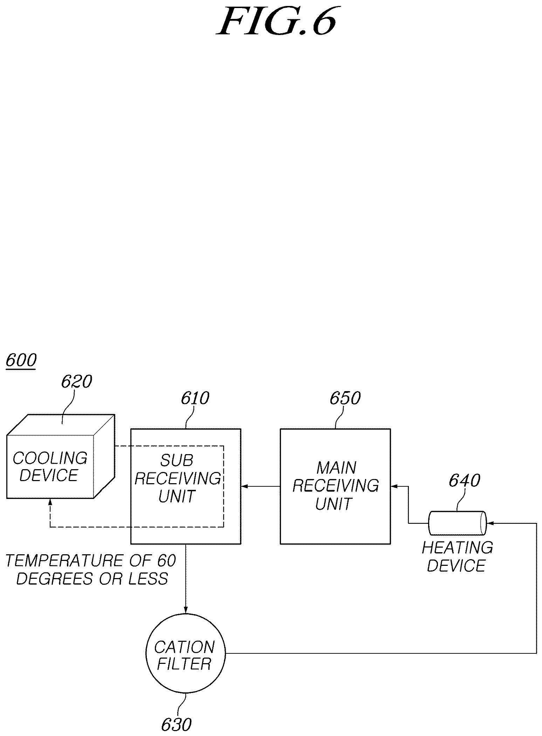

FIG. 6 is a view illustrating a structure of a cleaning device 600 according to an embodiment. The cleaning device 600 may include components that perform a cleaning process of removing a sludge layer (e.g., the sludge layer 510 of FIG. 5) of a glass member (e.g., the glass member 500 of FIG. 5) in a glass member processing system. The cleaning device 600 illustrated in FIG. 6 is exemplary, and embodiments are not limited thereto.

Referring to FIG. 6, e.g., the cleaning device 600 may remove the sludge layer (e.g., the sludge layer 510 of FIG. 5) on the surface of the glass member (e.g., the glass member 500 of FIG. 5).

According to an example, the cleaning device 600 may include a sub receiving unit 610, a cooling device 620, a cation filter 630, a heating device 640, or a main receiving unit 650.

According to an example, the main receiving unit 650 may receive an anionic cleaning solution. The anionic cleaning solution received in the main receiving unit 650 may be a solution in which no cations are present or relatively more anions are present than cations by filtering or removing cations from a solution containing a cationic component and an anionic component. The anionic cleaning solution received in the main receiving unit 650 may be, e.g., a solution in which no cations are present by filtering or removing cations from an initial cleaning solution (e.g., a neutral cleaning solution) or a solution used in a cleaning process (hereinafter referred to as a "used cleaning solution"), or in which relatively more anions are present than cations.

For example, the glass member 500 to which the sludge layer 510 is attached or stacked may be dipped into the anionic cleaning solution received in the main receiving unit 650 so that the sludge layer 510 may be removed from the glass member 500. For example, the temperature of the anionic cleaning solution received in the main receiving unit 650 may be between 20 degrees Celsius and 95 degrees Celsius. For example, the temperature of the anionic cleaning solution received in the main receiving unit 650 may be between 85 degrees Celsius and 95 degrees Celsius.

According to an example, when the glass member 500 to which the sludge layer 510 is attached or stacked is dipped in the anionic cleaning solution received in the main receiving unit 650 for a predetermined time or longer, the sludge layer 510 may be removed from the glass member 500. Here, the predetermined time or longer may be about 10 minutes or more. For example, the predetermined time may be about 2 hours.

In the cleaning process performed in the main receiving unit 650, the used cleaning solution, which is a reactant that chemically reacts with the sludge layer 510 in the cleaning process performed in the main receiving unit 650, may include anions (e.g., anions contained in the anionic cleaning solution) and cations (e.g., cations formed as the sludge layer 510 reacts with anions). For example, as the anionic cleaning solution reacts with the sludge layer 510 in the main receiving unit 650, the amount of cations in the cleaning solution may increase. If the amount of cations in the cleaning solution increases, the reactivity between the cleaning solution and the sludge layer 510 may decrease. The used cleaning solution reacting with the sludge layer in the main receiving unit 650 may flow through a circulation passage so that cations may be filtered or removed by the cation filter 630 and supplied to the main receiving unit 650 as an anionic cleaning solution. As the supplied anionic cleaning solution is continuously supplied to the main receiving unit 650, the overflow cleaning solution generated therein may be discharged to the sub receiving unit 610.

According to an example, the used cleaning solution discharged from the main receiving unit 650 may be regenerated into an anionic cleaning solution while passing through a circulation passage that passes through the sub receiving unit 610, the cation filter 630, and the heating device 640 and returns to the main receiving unit 650. The used cleaning solution discharged from the main receiving unit 650 may be temporarily stored in the sub receiving unit 610 and then discharged to the cation filter 630 to filter or remove cations, and may be moved to the heating device 640 to be heated to a predetermined temperature, and then supplied to the main receiving unit 650 as an anionic cleaning solution.

One side of the main receiving unit 650 may be fluidly connected to the heating device 640, and the other side of the main receiving unit 650 may be fluidly connected to the sub receiving unit 610. For example, the cleaning solution may flow from the heating device 640 to the main receiving unit 650 and then flow from the main receiving unit 650 to the sub receiving unit 610.

According to an example, when the initial cleaning solution is introduced into the cleaning device 600 from the outside of the cleaning device 600, the initial cleaning solution may be introduced into the sub receiving unit 610. In this case, the initial cleaning solution may be a solution containing cations and anions. The initial cleaning solution may be, e.g., a neutral solution.

According to an example, the temperature of the used cleaning solution discharged from the main receiving unit 650 to the sub receiving unit 610 or the initial cleaning solution introduced from the outside may be controlled by the cooling device 620. The cooling device 620 may be provided to cool the used cleaning solution or the initial cleaning solution received in the sub receiving unit 610. The used cleaning solution or the initial cleaning solution received in the sub receiving unit 610 may be cooled below a predetermined temperature. For example, the predetermined temperature may be about 60 degrees Celsius. The used cleaning solution or the initial cleaning solution cooled below the predetermined temperature may be moved to the cation filter 630.

According to an example, the cleaning device 600 may include the cation filter 630. One side of the cation filter 630 may be fluidly connected to the sub receiving unit 610, and the other side of the cation filter 630 may be connected to the heating device 640. For example, the initial cleaning solution or the used cleaning solution introduced from the sub receiving unit 610 may flow from the cation filter 630 to the heating device 640.

According to an example, the cation filter 630 may include a cation exchange resin for filtering cations. The cation exchange resin may include, e.g., a combination of one or more of materials such as polystyrene, polyacrylic, divinylbenzene, benzenesulfonic acid, or dimethylbenzene, but is not limited thereto. The cation exchange resin may include, e.g., a sulfonate group as a functional group.

According to the example, the cation filter 630 may be configured to filter or remove cations contained in the initial cleaning solution or the used cleaning solution. The cation filter 630 may filter or remove cations in the initial cleaning solution or the used cleaning solution to produce a solution containing only anions or an anionic cleaning solution containing a large amount of anions compared to cations. For example, in the anionic cleaning solution filtered by the cation filter 630, the anionic components may occupy more than the cationic components. For example, the anionic cleaning solution filtered by the cation filter 630 may have a weak alkaline property due to the remaining anions. For example, the pH of the filtered anionic cleaning solution may be 7 to 10. The anionic cleaning solution in which the cations are filtered or removed by the cation filter 630 may be moved to the heating device 640.

According to an example, the cleaning device 600 may include a heating device 640. One side of the heating device 640 may be fluidly connected to the cation filter 630, and the other side of the heating device 640 may be fluidly connected to the main receiving unit 650. For example, the anionic cleaning solution may flow from the cation filter 630 to the heating device 640 and then flow from the heating device 640 to the main receiving unit 650.

According to an example, the heating device 640 may be configured to heat the anionic cleaning solution to a predetermined temperature or higher before being introduced into the main receiving unit 650. For example, the predetermined temperature may be, e.g., 60 degrees Celsius. For example, the heating device 640 may be configured to heat the anionic cleaning solution to 85 to 95 degrees Celsius.

According to an embodiment, by using an anionic cleaning solution circulated by the cleaning device 600 and recyclable rather than using a one-time alkali cleaning solution to remove the sludge layer 510, an eco-friendly facility for manufacturing the glass member 500 may be built. Further, according to an embodiment, since the cleaning solution is circulated and recycled by the cleaning device 600, the input amount of the cleaning solution may be significantly reduced compared to when the conventional alkaline cleaning solution is input.

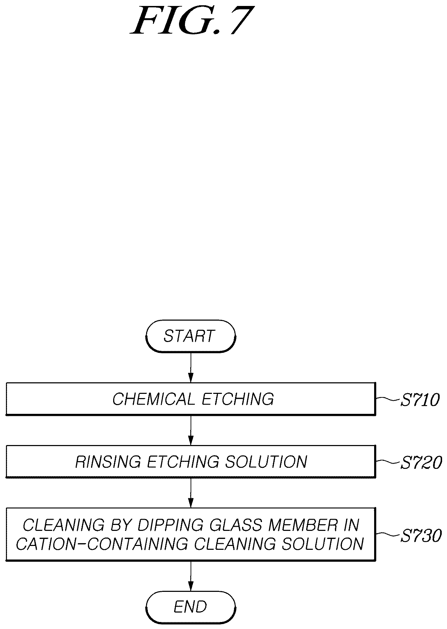

FIG. 7 is a flowchart illustrating a process of processing a glass member 500 in a glass member processing system according to an embodiment. The manufacturing process illustrated in FIG. 7 is exemplary, and the manufacturing method of embodiments are not limited.

Referring to FIG. 7, a glass member processing method by a glass member processing system may include an etching process of etching a glass member (or a glass substrate) (e.g., the glass member 500 of FIG. 5), a rinsing process of removing the etching solution on the surface of the glass member 500 after the etching, or a cleaning process of removing a sludge layer (e.g., the sludge layer 510 of FIG. 5) formed on the glass member 500 after the rinsing. The glass member processing method may be applied, e.g., when processing the glass member 500 included in a display (e.g., the display 101 of FIG. 1, the display 330 of FIG. 3, or the display 400 of FIG. 4) on which chemical etching is performed, but is not limited thereto, and may be applied when processing all glass members disposed on the surface of an electronic device (e.g., the electronic device 100 of FIG. 1, or the electronic device 300 of FIG. 3). The glass member mentioned below may be the glass member 500 of FIG. 5 for convenience of description.

According to an example, the glass member processing system may remove the remaining unnecessary materials while leaving only necessary portions of the glass member 500 through an etching process such as, for example, chemical etching (S710). For example, the glass member processing system may use an alkaline or acidic etching solution for chemical etching. The alkaline or acidic etching solution may chemically react with a portion of the glass member 500 to be etched to break the chemical bond of the glass member 500 to separate the material to be removed. For example, as the etching solution destroys the Si-O bond of the glass member 500, the etching process may be performed.

According to an example, the glass member processing system may remove the etching solution remaining on the surface of the glass member 500 on which the etching process is completed by the rinsing process (S720). After the glass member 500 is chemically etched by the etching solution, the etching solution may remain on the surface of the glass member 500. The etching solution remaining on the surface of the glass member 500 may be removed by a rinsing solution. The rinsing solution may be, e.g., pure water (DI water). The rinsing process of rinsing the etching solution may be omitted.

According to an example, the glass member processing system may remove the sludge layer 510 formed on the glass member 500 on which the etching process or the rinsing process is completed, by the cleaning process. The cleaning process may include, e.g., a process of dipping the glass member 500 where the sludge layer 510 is formed in the cation-filtered or removed anionic cleaning solution (S730). After the etching process or the rinsing process, the sludge layer 510 may remain on the surface of the glass member 500. The sludge layer 510 may be removed by a chemical method. When the glass member 500 to which the sludge layer 510 is attached or stacked is dipped into the anionic cleaning solution, the glass member processing system may allow the anions in the anionic cleaning solution to break the bond of the sludge layer 510 so that the sludge layer 510 is separated from the glass member 500. Here, the temperature of the anionic cleaning solution may be between 25 degrees Celsius and 95 degrees Celsius. For example, the temperature of the anionic cleaning solution may be between 85 degrees Celsius and 95 degrees Celsius. For example, the time for dipping the glass member 500 to which the sludge layer 510 is attached or stacked into the anionic cleaning solution may be 10 minutes or longer. For example, the dipping time may be about 2 hours.

According to an example, operation S730 may be performed by the cleaning device 600 of FIG. 6. According to an example, the anionic cleaning solution may circulate between the main receiving unit (e.g., the main receiving unit 650 of FIG. 6) in which the glass member 500 is dipped and the cation filter (e.g., the cation filter 630 of FIG. 6), thereby continuously filtering or removing cations in the cleaning solution used in the cleaning process. For example, the used cleaning solution in which the chemical reaction with the sludge layer 510 is performed may include anionic components and cationic components generated by the reaction between the anionic components and the sludge layer 510. The cations generated by the reaction of the anions with the sludge layer 510 may be filtered or removed again by the cation filter 630 to re-produce the anionic cleaning solution.

According to an embodiment, one or more of the above-described processes may be omitted, or one or more other processes may be added.

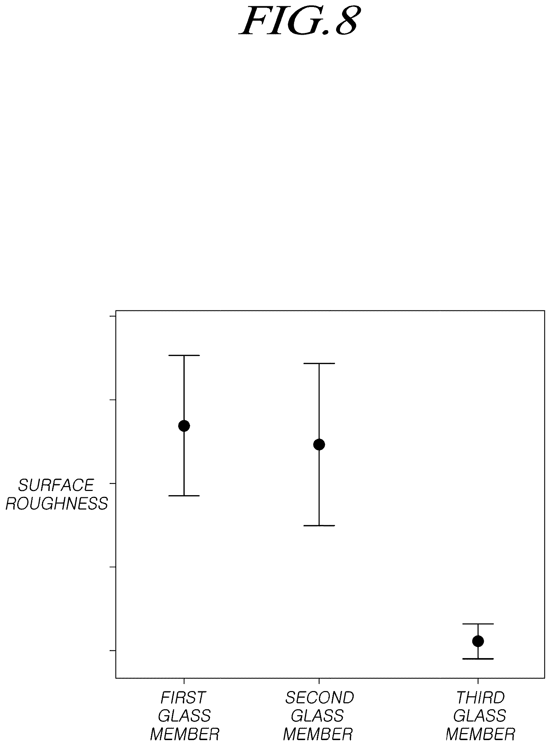

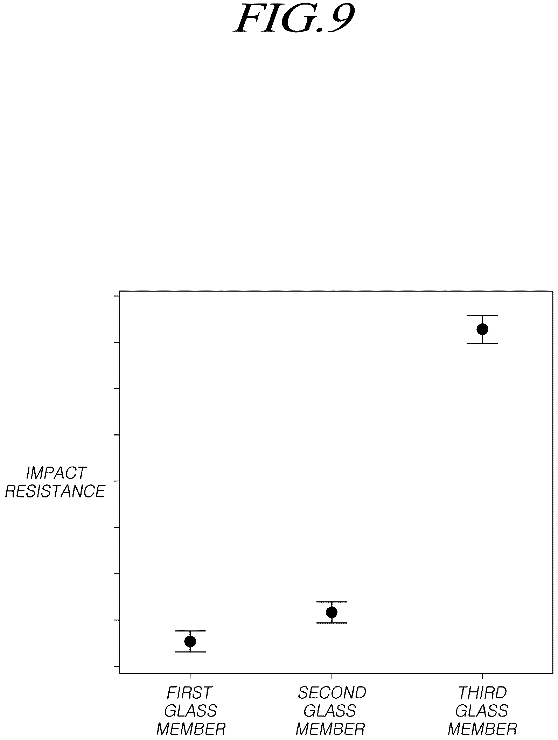

FIG. 8 is a graph illustrating enhanced surface roughness of a glass member according to an embodiment. FIG. 9 is a graph illustrating enhanced impact resistance performance of a glass member according to an embodiment. The graphs illustrated in FIGS. 8 and 9 are exemplary, and the data represented in the graphs does not limit the disclosure.

In FIG. 8, the horizontal axis may be the glass members manufactured by different manufacturing processes, and the vertical axis may be the surface roughness. In FIG. 9, the horizontal axis may be the glass members manufactured by different manufacturing processes, and the vertical axis may be the impact resistance. The impact resistance may be a force that resists from an external impact.

Referring to FIGS. 8 and 9, the horizontal axis is divided into a first glass member, a second glass member, and a third glass member. The first glass member may be a glass member in a state in which the etching solution is rinsed after the etching process is completed. For example, the first glass member may be a glass member in a state in which only operations S710 and S720 are performed in FIG. 7. The second glass member may be a glass member in a state in which the sludge layer on the surface is removed using an alkali cleaning solution after the etching process and/or the process of rinsing the etching solution is completed. For example, the second glass member may be a glass member in a state in which the process of removing the sludge layer is performed using the alkaline cleaning solution after operations S710 and S720 of FIG. 7 are performed. The third glass member may be a glass member 500 in a state in which the sludge layer (e.g., the sludge layer 510 of FIG. 5) of the glass member (e.g., the glass member 500 of FIG. 5) is removed using the anionic cleaning solution after the etching process and/or the process of rinsing the etching solution is completed. For example, the third glass member may be a glass member 500 in a state in which operations S710 to S730 of FIG. 7 are performed.

In FIG. 8, when the surface roughness range of the first glass member and the surface roughness range of the second glass member are compared, there is no significant difference in roughness. In the case of the first glass member, since the by-products generated in the chemical etching process are attached to the glass member to form a sludge layer, the first glass member may have relatively high surface roughness. In the case of the second glass member, the sludge layer may be removed using an alkaline solution, but as a result of the alkaline solution damaging the surface of the second glass member itself, the second glass member may have a surface roughness similar to that of the first glass member.

In FIG. 8, the surface roughness of the third glass member is significantly smaller than the surface roughness of the first glass member and the second glass member. Since the third glass member uses an anionic cleaning solution to remove the sludge layer 510, the surface of the glass member itself may not be damaged. The anionic cleaning solution may be, e.g., a cleaning solution that contains only anions or contains a relatively higher proportion of anions than cations by filtering or removing cations from a neutral solution. As a result, it is possible to manufacture a glass member having enhanced surface roughness.

In FIG. 9, when the impact resistance of the first glass member is compared with the impact resistance of the second glass member, there is no significant difference. This is related to the surface roughness values of the first glass member and the second glass member. In general, as the surface roughness value increases (the surface roughens), the impact resistance may decrease.

In FIG. 9, the impact resistance of the third glass member is significantly larger than the impact resistance of the first glass member and the second glass member. Compared to the first glass member and the second glass member, the third glass member may have a significantly smaller surface roughness value, thereby enhancing impact resistance. For example, the surface roughness of the glass member 500 corresponding to the third glass member may be 5 nm to 40 nm.

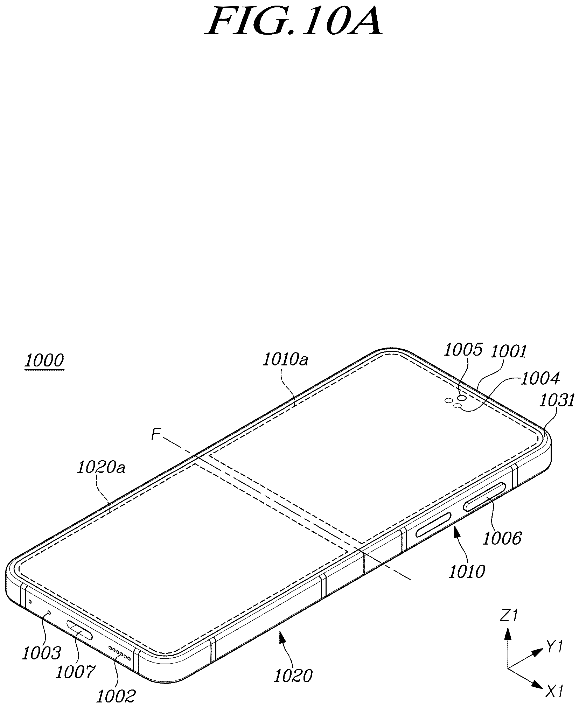

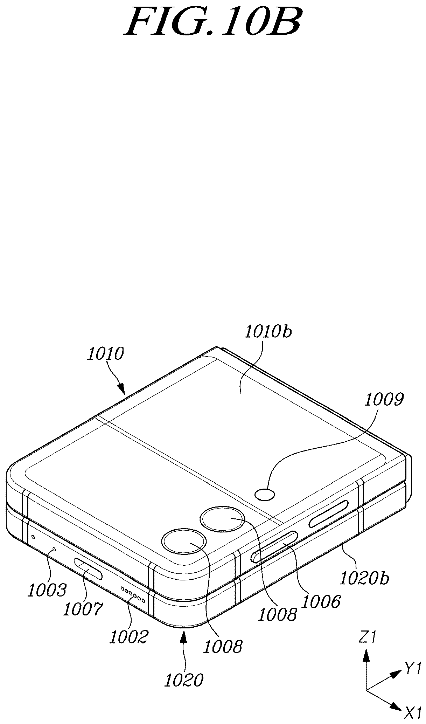

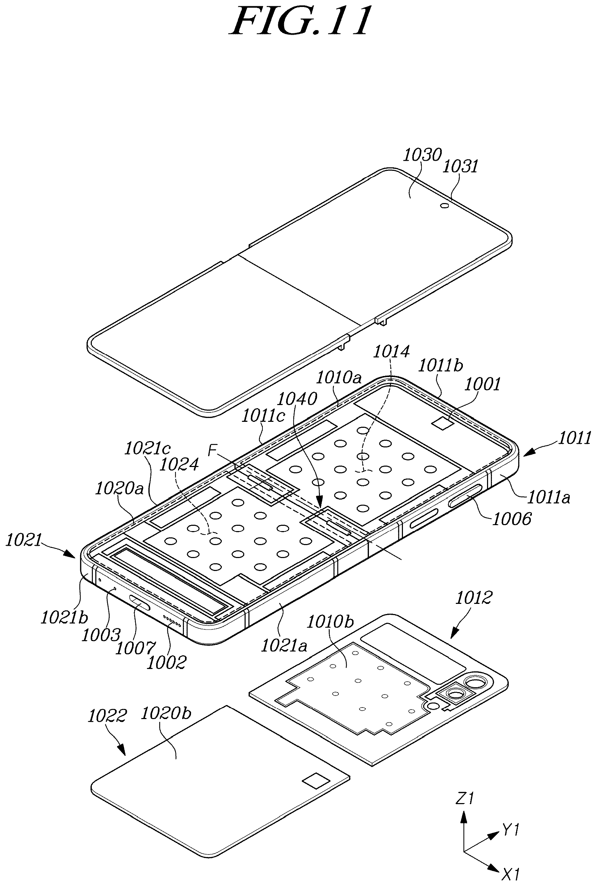

FIGS. 10A and 10B are perspective views illustrating a flexible electronic device 1000 according to an embodiment. FIG. 11 is an exploded perspective view illustrating a flexible electronic device 1000 according to an embodiment.

FIG. 10A is a perspective view illustrating a foldable electronic device in an unfolded state according to an embodiment. FIG. 10B is a perspective view illustrating a foldable electronic device in a folded state according to an embodiment. FIG. 11 is an exploded view illustrating a foldable electronic device according to an example embodiment. The foldable electronic device shown in FIGS. 10A to 11 is for illustrative purposes only, and embodiments are not limited by the drawings. The XYZ coordinate system shown in FIGS. 10A to 11 is for illustrative purposes of describing the layout of the components and does not limit the scope of the claims.

The electronic device 1000 may include at least one pair of housings 1010 and 1020. The pair of housings 1010 and 1020 may be rotatably coupled to fold with respect to, e.g., a hinge (e.g., the hinge 1040 of FIG. 11) while facing each other. For example, the pair of housings 1010 and 1020 may include a first housing 1010 and a second housing 1020. The first housing 1010 and the second housing 1020 may be disposed on two opposite sides of the folding axis F. The first housing 1010 and the second housing 1020 may have symmetrical shapes with respect to the folding axis F. Here, the folding axis F may be an axis in the X1 direction, formed by the hinge 1040.

The first housing 1010 may have substantially the same length as the second housing 1020 (e.g., length in the Y1-axis direction), but embodiments are not limited thereto. The first housing 1010 may have substantially the same width as the second housing 1020 (e.g., width in the X1-axis direction), but embodiments are not limited thereto.

Hereinafter, an unfolding state (or flat state) or an unfolded state may be a state in which the angle between the first housing 1010 and the second housing 1020 is substantially 180 degrees. A folding state or a folded state may be a state in which the angle formed between the first housing 1010 and the second housing 1020 is substantially 0 degrees. An intermediate state may be any state between the unfolding state and the folding state. The electronic device 1000 may rotate with respect to the hinge 1040 such that the first housing 1010 and the second housing 1020 form an angle from, for example, 0 degrees to 180 degrees. The electronic device 1000 may also rotate with respect to the hinge 1040 to form an angle, e.g., between 180 degrees and 360 degrees.

The first housing 1010 may include a first surface 1010a and a second surface 1010b. For example, the first surface 1010a may be provided to face in a first direction (e.g., +Z1-axis direction). The first surface 1010a may be, e.g., a surface on which at least a portion of the flexible display 1030 is disposed. The first surface 1010a may be, e.g., a virtual surface overlapping at least a portion of the flexible display 1030. For example, the second surface 1010b may be provided to face in a second direction (e.g., -Z1-axis direction). The second surface 1010b may be, e.g., a surface on which the first rear cover 1012 is disposed. The second surface 1010b may be parallel to the first surface 1010a. The second surface 1010b may be a plane defined by, e.g., the first rear cover 1012.

The second housing 1020 may include a third surface 1020a and a fourth surface 1020b. For example, the third surface 1020a may be provided to face in the first direction (e.g., +Z1-axis direction). The third surface 1020a may be, e.g., a surface on which at least a portion of the flexible display 1030 is disposed. The third surface 1020a may be, e.g., a virtual surface overlapping at least a portion of the flexible display 1030. For example, the fourth surface 1020b may be provided to face in a second direction (e.g., -Z1-axis direction). The fourth surface 1020b may be, e.g., a surface on which the second rear cover 1022 is disposed. The fourth surface 1020b may be parallel to the third surface 1020a. The fourth surface 1020b may be a plane defined by, e.g., the second rear cover 1022.

When the electronic device 1000 is unfolded, the first surface 1010a and the third surface 1020a may be positioned within one arbitrary virtual plane (e.g., an X1-Y1 plane). For example, the first surface 1010a and the third surface 1020a may form the same plane when the electronic device 1000 is unfolded. For example, the first surface 1010a and the third surface 1020a may be disposed to form 180 degrees with respect to the X1-Y1 plane in the unfolded state. When the electronic device 1000 is unfolded, the second surface 1010b and the fourth surface 1020b may be positioned within another arbitrary virtual plane (e.g., an X1-Y1 plane). For example, the second surface 1010b and the fourth surface 1020b may form the same plane in the unfolded state of the electronic device 1000. For example, the second surface 1010b and the fourth surface 1020b may be disposed to form 180 degrees with respect to the X1-Y1 plane in the unfolded state.

In the folded state of the electronic device 1000, at least a portion of the first surface 1010a and at least a portion of the third surface 1020a may face each other. For example, in the folded state of the electronic device 1000, the angle between the first surface 1010a and the third surface 1020a may be 0 degrees from the X1-Y1 plane. As the electronic device 1000 is folded from the unfolded state, the angle between the first surface 1010a and the third surface 1020a from the X1-Y1 plane may gradually decrease. For example, the angle formed between the first surface 1010a and the third surfaces 1020a from the X1-Y1 plane in the intermediate state may be determined between about 0 degrees and about 180 degrees. In the folded state of the electronic device 1000, the second surface 1010b and the fourth surface 1020b may be parallel to each other. For example, the second surface 1010b and the fourth surface 1020b may face in opposite directions in the folded state of the electronic device 1000.

The pair of housings 1010 and 1020 included in the electronic device 1000 is not limited to the shape and coupling shown but may rather be implemented in other shapes or via a combination and/or coupling of other components.

The first housing 1010 may include a first side frame 1011. The first side frame 1011 may form a side surface of the first housing 1010. The first side frame 1011 may form part of the exterior of the first housing 1010. The first side frame 1011 may be provided to protect components received inside the electronic device 1000 from the outside.

The first side frame 1011 may include a first side member 1011a, a second side member 1011b, and/or a third side member 1011c. The first side member 1011a may have a first length along a first length direction (e.g., Y1-axis direction). The second side member 1011b may extend from the first side member 1011a in a substantially vertical direction (e.g., the X1-axis direction). The second side member 1011b may extend to have a second length equal to or different from the first length. The third side member 1011c may extend from the second side member 1011b in a substantially vertical direction (e.g., the Y1-axis direction). The third side member 1011c may extend in a direction substantially parallel to the first side member 1011a. The third side member 1011c may have a first length along the first length direction (e.g., Y1-axis direction).

The first side member 1011a, the second side member 1011b, and the third side member 1011c may be disposed to be visible from the outside. At least a portion of the first side member 1011a, the second side member 1011b, and/or the third side member 1011c may be formed of a curved surface. The first side frame 1011 may be formed in a rectangular (e.g., square or rectangular) shape by the first side member 1011a, the second side member 1011b, and the third side member 1011c. The first side member 1011a, the second side member 1011b, and the third side member 1011c may be integrally formed, but embodiments are not limited thereto.

The first housing 1010 may include a first side frame 1011. The first side frame 1011 may form a side surface of the first housing 1010. The first side frame 1011 may form part of the exterior of the first housing 1010. The first side frame 1011 may be provided to protect components received inside the electronic device 1000 from the outside. The second side frame 1021 may include a fourth side member 1021a, a fifth side member 1021b, and/or a sixth side member 1021c. The fourth side member 1021a may have a third length along a first length direction (e.g., Y1-axis direction). The fifth side member 1021b may extend from the fourth side member 1021a in a substantially vertical direction (e.g., the X1-axis direction). The fifth side member 1021b may extend to have a fourth length equal to or different from the third length. The sixth side member 1021c may extend from the fifth side member 1021b in a substantially vertical direction (e.g., the Y1-axis direction). The sixth side member 1021c may extend in a direction substantially parallel to the fourth side member 1021a. The sixth side member 1021c may have a third length along the first length direction (e.g., Y1-axis direction).

The fourth side member 1021a, the fifth side member 1021b, and the sixth side member 1021c may be disposed to be visible from the outside. At least a portion of the fourth side member 1021a, the fifth side member 1021b, and/or the sixth side member 1021c may be formed of a curved surface. The second side frame 1021 may be formed in a rectangular (e.g., square or rectangular) shape by the fourth side member 1021a, the fifth side member 1021b, and the sixth side member 1021c. The first length may be substantially equal to the third length. The second length may be substantially equal to the fourth length. The fourth side member 1021a, the fifth side member 1021b, and the sixth side member 1021c may be integrally formed, but are not limited thereto.

In the unfolded state of the electronic device 1000, the first side member 1011a and the fourth side member 1021a may be positioned substantially in a straight line. In the unfolded state of the electronic device 1000, the second side member 1011b and the fifth side member 1021b may be parallel to each other. In the unfolded state of the electronic device 1000, the third side member 1011c and the sixth side member 1021c may be positioned substantially in a straight line.

In the folded state of the electronic device 1000, the first side member 1011a and the fourth side member 1021a may overlap each other. In the folded state of the electronic device 1000, the second side member 1011b and the fifth side member 1021b may overlap each other. In the folded state of the electronic device 1000, the third side member 1011c and the sixth side member 1021c may overlap each other.

The first housing 1010 may include a first rear cover 1012. The first rear cover 1012 may form at least a portion of the second surface 1010b of the first housing 1010. The first rear cover 1012 may be combined with the first side frame 1011. The first rear cover 1012 may be integrally formed with, e.g., the first side frame 1011.

The second housing 1020 may include a second rear cover 1022. The second rear cover 1022 may form at least a portion of the fourth surface 1020b of the second housing 1020. The second rear cover 1022 may be combined with the second side frame 1021. The second rear cover 1022 may be integrally formed with, e.g., the second side frame 1021.

The first rear cover 1012 and/or the second rear cover 1022 may be formed of at least one of, or a combination of at least two of, laminated or colored glass, ceramic, polymer, or metal (e.g., aluminum, stainless steel (STS), or magnesium).

The electronic device 1000 may include a flexible display 1030 (e.g., a foldable display or display). The flexible display 1030 may be disposed across the first housing 1010, the hinge 1040 and the second housing 1020. The flexible display 1030 may be disposed from the first surface 1010a of the first housing 1010 across the hinge structure 1040 up to at least a portion of the third surface 1020a of the second housing 1020. The flexible display 1030 may be disposed so that the first surface 1010a of the first housing 1010 and the third surface 1020a of the second housing 1020 overlap. A portion of the flexible display 1030 corresponding to the hinge 1040 may be bent according to the rotation of the hinge 1040.

The flexible display 1030 may be disposed to be visible from the outside in the unfolded state in which the angle between the first housing 1010 and the second housing 1020 is 180 degrees. The flexible display 1030 may be disposed to be invisible from the outside in the folded state (or in-folding state) in which the angle between the first housing 1010 and the second housing 1020 is 0 degrees. The flexible display 1030 may be disposed to be visible from the outside in the folded state (or out-folding state) in which the angle between the first housing 1010 and the second housing 1020 is 360 degrees.

The electronic device 1000 may include a protective cover 1031. The protective cover 1031 may be positioned to protect an edge portion of the flexible display 1030. The protective cover 1031 may form part of the exterior of the electronic device 1000.

The electronic device 1000 may include at least one of an input device (e.g., the microphone 1003), a sound output device (e.g., the receiver 1001 for phone calls or speaker 1002), sensor modules 1004, a camera module (the first camera module 1005 or second camera module 1008), a connector port 1007, a key input device 1006, or an indicator (not shown), disposed in the first inner space 1014 of the first housing 210 or the second inner space 1024 of the second housing 1020. The electronic device 1000 may be configured to omit at least one of the above-described components or add other components.

The input device may include a plurality of microphones disposed to detect the direction of sound. The sound output device may include, e.g., the receiver 1001 for phone calls and the speaker 1002. The sound output devices 1001 and 1002 may be disposed to face the outside through at least one speaker hole formed in the first housing 1010 or the second housing 1020. The connector port 1007 may be disposed to face the outside through a connector port hole formed in the first housing 1010 or the second housing 1020.

The sensor module 1004 may produce an electrical signal or data value corresponding to the internal operation state or external environment state of the electronic device 1000. The sensor module 1004 may include at least one of, for example, a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an accelerometer, a grip sensor, a color sensor, an infrared (IR) sensor, a biometric sensor, a temperature sensor, or a humidity sensor.

The camera module may include a first camera module 1005 disposed on the front (e.g., surface in the +Z1-axis direction) of the electronic device 1000 or a second camera module 1008 disposed on the rear surface (e.g., surface in the -Z1-axis direction) of the electronic device 200. The first camera module 1005 and/or the second camera module 1008 may include one or more lenses, an image sensor, and/or an image signal processor. For example, the first camera module 1005 may be disposed under the flexible display 1030 and be configured to capture a subject through a portion of the active area of the flexible display 1030. The flash 1009 may be disposed on the second camera module 1008. The flash 1009 may include, e.g., a light emitting diode (LED) or a xenon lamp.

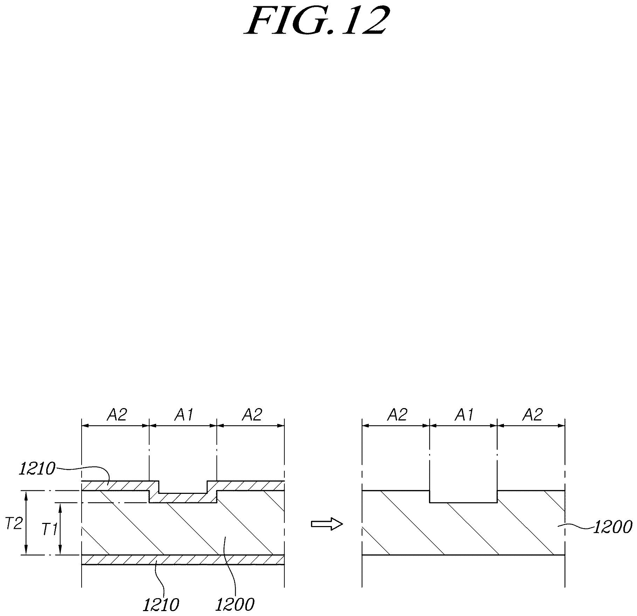

FIG. 12 is a view illustrating that a sludge layer 1210 attached to a glass member 1200 applied to FIG. 10A is removed according to an embodiment. The view illustrated in FIG. 12 is exemplary, and embodiments are not limited thereto.

The glass member 1200 illustrated in FIG. 12 may be included in the display (e.g., the flexible display 1030) illustrated in FIGS. 10A to 11.

According to an example, the glass member 1200 may include a flexible area A1 and a flat area A2. The flexible area A1 may be, e.g., an area in which a bend may be formed when the electronic device (e.g., the electronic device 1000 of FIG. 10A) is folded. The flexible area A1 may be, e.g., a peripheral area around the folding axis (e.g., the folding axis F of FIG. 10A). For example, the flexible area A1 may be the flexible area of the flexible display 1030. The flat area A2 may be, e.g., an area in which no bend is not formed when the electronic device 1000 is folded. The flat area A2 may be an area other than the flexible area A1 in the glass member 1200.

According to an example, the glass member 1200 may have a differential thickness structure. For example, the thickness T1 of the glass member 1200 in the flexible area A1 may be formed to be smaller than the thickness T2 of the glass member 1200 in the flat area A2. By forming such a differential thickness structure, the folding performance of the display 1030 in the flexible area A1 may be enhanced. The thickness T2 of the glass member 1200 may be, e.g., a thin glass having a thickness of 20 to 300um, but embodiments are not limited thereto. For example, the glass member 1200 may be a thin glass having a thickness T2 of 150 to 300 um.

According to an example, the differential thickness structure of the glass member 1200 may be formed through an etching process. Chemical etching may be applied to the flexible area A1 to form the differential thickness T1 in the flexible area A1. For example, the glass member 1200 may be etched so that the thickness T1 of the portion corresponding to the flexible area of the flexible display 1030 is smaller than the thickness T2 of the remaining portion.

In the case of the glass member 1200 applied to the flexible display 1030, more portions of the glass member 1200 may be etched than portions of the glass member (e.g., the glass member 500 of FIG. 5) applied to a general flat display (e.g., the display 101 of FIG. 1, the display 330 of FIG. 3, or the display 400 of FIG. 4), and thus the sludge layer 1210 formed by the by-product may be formed more or thicker. As a result, the impact resistance of the glass member 1200 may be reduced. Further, in the flexible area A1, as the thickness T1 is configured to be smaller than the thickness T2 in order to have a differential thickness structure, the impact resistance of the glass member 1200 in the flexible area A1 may be significantly reduced. When the process proposed in embodiments are applied, the sludge layer 1210 attached or stacked on the surface of the glass member 1200 may be removed and impact resistance may be enhanced. For example, the sludge layer 1210 may be removed using the cleaning device 600 illustrated in FIG. 6. For example, the manufacturing method described with reference to FIG. 7 may be applied to the glass member 1200.

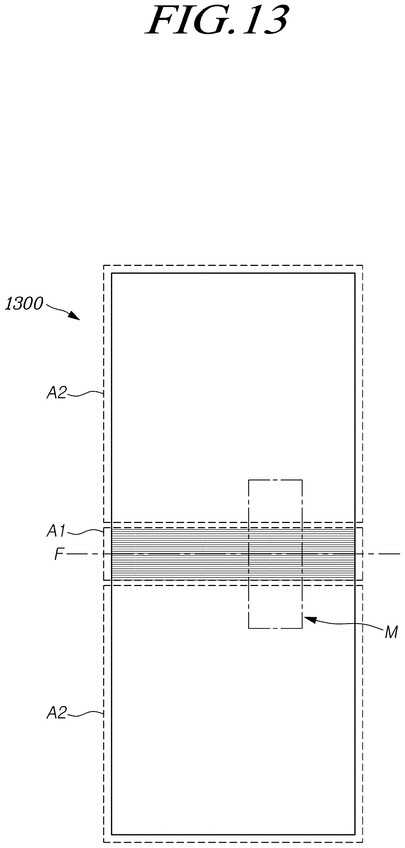

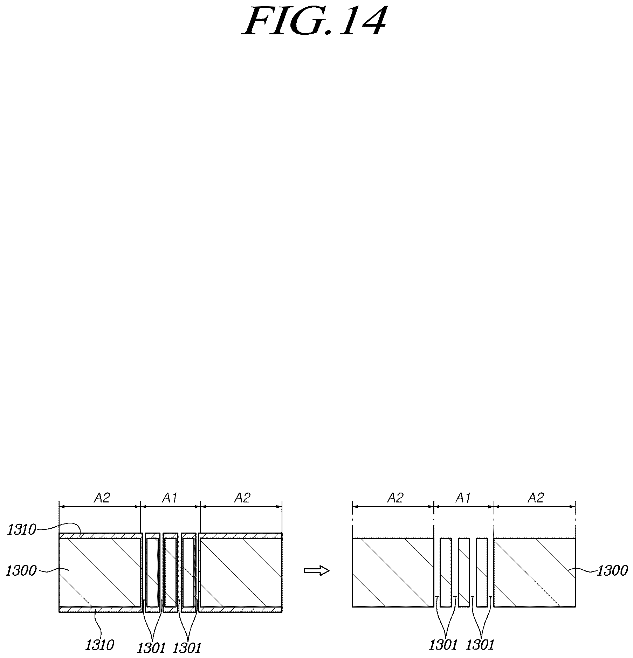

FIG. 13 is a perspective view illustrating a glass member 1300 applied to FIG. 10A. FIG. 14 is a cross-sectional view schematically illustrating portion M of FIG. 13, in which a sludge layer 1310 attached to a glass member 1300 is removed. The drawings illustrated in FIGS. 13 and 14 are exemplary, and embodiments are not limited thereto.

The glass member 1300 illustrated in FIGS. 13 and 14 may be included in the display (e.g., the flexible display 1030) illustrated in FIGS. 10A to 11. FIG. 14 exaggerates the sizes of the plurality of holes 1301 formed in the flexible area A1 for convenience of description. The sizes and shapes of the plurality of holes 1301 illustrated in FIGS. 13 and 14 are exemplary, and the scope of embodiments are not limited.

According to an example, the glass member 1300 may include a flexible area A1 and a flat area A2. The flexible area A1 may be, e.g., an area in which a bend may be formed when the electronic device (e.g., the electronic device 1000 of FIG. 10A) is folded. Here, the flexible area A1 may be the flexible area of the flexible display 1030. The flat area A2 may be, e.g., an area in which no bend is not formed when the electronic device 1000 is folded. The flat area A2 may be an area other than the flexible area A1 in the glass member 1300.

According to an example, a plurality of holes 1301 (e.g., slit holes or recesses) may be formed in the flexible area A1 of the glass member 1300. The plurality of holes 1301 may be disposed to form, e.g., a lattice pattern in the flexible area A1. The plurality of holes 1301 may be, e.g., slit holes extending in a direction parallel to the folding axis F. By configuring a plurality of holes 1301 in the flexible area A1, the folding performance of the display 1030 in the flexible area A1 may be enhanced.

According to an example, the plurality of holes 1301 of the glass member 1300 may be formed through an etching process. For example, chemical etching may be applied to the flexible area A1 to form the plurality of holes 1301 in the flexible area A1.

The glass member 1300 may be, e.g., a thin glass having a thickness of 20 to 300um, but is not limited thereto. For example, the glass member 1300 may be a thin glass having a thickness of 150 to 300um.

In the case of the glass member 1300 applied to the flexible display 1030, more portions of the glass member 1300 may be etched than portions of the glass member (e.g., the glass member 500 of FIG. 5) applied to a general flat display (e.g., the display 101 of FIG. 1, the display 330 of FIG. 3, or the display 400 of FIG. 4). Accordingly, the sludge layer 1310 formed by the by-product may be formed to be thicker, and the sludge layer 1310 may be formed inside the plurality of holes 1301. As a result, the impact resistance of the glass member 1300 may be decreased, or the through portion of the hole 1301 may be clogged, thereby deteriorating the folding performance. In the glass member 1300 manufactured by the process proposed in the disclosure, the sludge layer 1310 attached or stacked on the surface of the glass member 1300 may be removed and impact resistance may be enhanced. For example, the sludge layer 1310 may be removed using the cleaning device 600 illustrated in FIG. 6. For example, the manufacturing method described with reference to FIG. 7 may be applied to the glass member 1300.

The electronic devices 100 and 1000 according to an embodiment may include an electronic device such as, for example, a bar type, a foldable type, a rollable type, a sliding type, a wearable type, a tablet personal computer (PC), and/or a notebook PC. The electronic devices 100 and 1000 according to an embodiment are not limited to the above-described examples, and may include other various electronic devices.

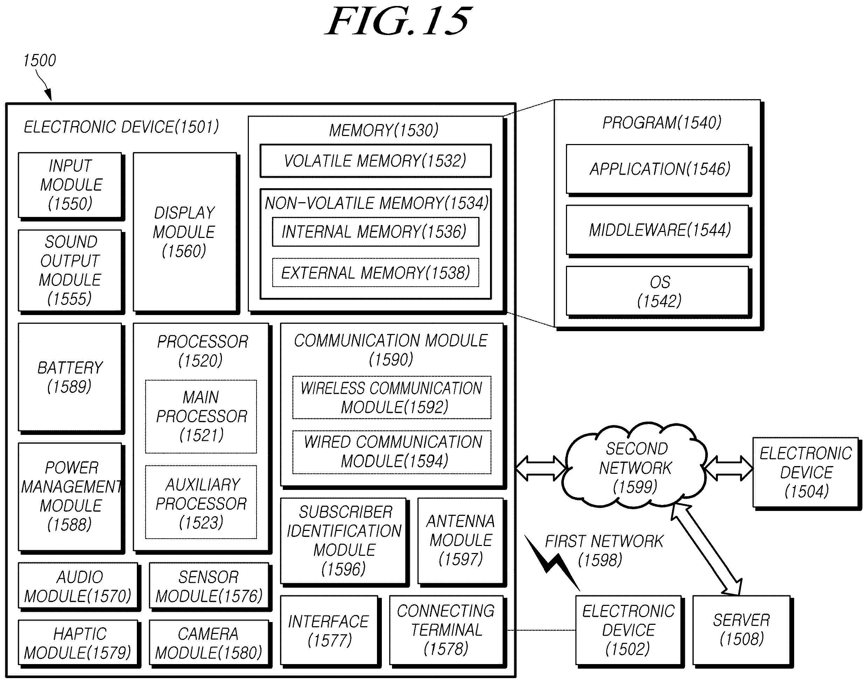

FIG. 15 is a block diagram illustrating an electronic device 1501 in a network environment 1500 according to various embodiments.

Referring to FIG. 15, the electronic device 1501 in the network environment 1500 may communicate with at least one of an electronic device 1502 via a first network 1598 (e.g., a short-range wireless communication network), or an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module (SIM) 1596, or an antenna module 1597. In an embodiment, at least one (e.g., the connecting terminal 1578) of the components may be omitted from the electronic device 1501, or one or more other components may be added in the electronic device 101. According to an embodiment, some (e.g., the sensor module 1576, the camera module 1580, or the antenna module 1597) of the components may be integrated into a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1501 includes the main processor 1521 and the auxiliary processor 1523, the auxiliary processor 1523 may be configured to use lower power than the main processor 1521 or to be specified for a designated function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 123. According to an embodiment, the auxiliary processor 1523 (e.g., the neural processing unit) may include a hardware structure specified for artificial intelligence model processing. The artificial intelligence model may be generated via machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by other component (e.g., the processor 1520) of the electronic device 1501, from the outside (e.g., a user) of the electronic device 1501. The input module 1550 may include, for example, a microphone, a mouse, a keyboard, keys (e.g., buttons), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display 1560 may include, for example, a display, a hologram device, or a projector and control circuitry to control a corresponding one of the display, hologram device, and projector. According to an embodiment, the display 1560 may include a touch sensor configured to detect a touch, or a pressure sensor configured to measure the intensity of a force generated by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 101, and then generate an electrical signal or data value corresponding to the detected state. According to an embodiment, the sensor module 1576 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, an SD card connector, or an audio connector (e.g., a headphone connector).

The haptic module 1579 may convert an electrical signal into a mechanical stimulus (e.g., a vibration or motion) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device 1504 via a first network 1598 (e.g., a short-range communication network, such as Bluetooth^{™}, wireless-fidelity (Wi-Fi) direct, or infrared data association (IrDA)) or a second network 1599 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1592 may identify or authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1597 may transmit or receive a signal or power to or from the outside (e.g., the external electronic device). According to an embodiment, the antenna module 1597 may include one antenna including a radiator formed of a conductor or conductive pattern formed on a substrate (e.g., a printed circuit board (PCB)). According to an embodiment, the antenna module 1597 may include a plurality of antennas (e.g., an antenna array). In this case, at least one antenna appropriate for a communication scheme used in a communication network, such as the first network 1598 or the second network 1599, may be selected from the plurality of antennas by, e.g., the communication module 1590. The signal or the power may then be transmitted or received between the communication module 1590 and the external electronic device via the selected at least one antenna. According to an embodiment, other parts (e.g., radio frequency integrated circuit (RFIC)) than the radiator may be further formed as part of the antenna module 1597.

According to various embodiments, the antenna module 1597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. The external electronic devices 1502 or 1504 each may be a device of the same or a different type from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an Internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store, or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the electronic device 100 of FIG. 1, the electronic device 300 of FIG. 3, or the electronic device 1000 of FIG. 10) may include a display (e.g., the display 101 of FIG. 1, the display 330 of FIG. 3, the display 400 of FIG. 4, or the flexible display 1030 of FIG. 10) and a glass member (e.g., the glass member 500 of FIG. 5, the glass member 1200 of FIG. 12, or the glass member 1300 of FIG. 13) disposed on a surface of the electronic device 100, 300, or 1000 including the display 101, 330, 400, or 1030. In the glass member 500, 1200, or 1300, a sludge layer (e.g., the sludge layer 510 of FIG. 5, the sludge layer 1210 of FIG. 12, or the sludge layer 1310 of FIG. 13) by a by-product attached to the surface in an etching process may be cleaned by an anionic cleaning solution. The anionic cleaning solution may be a solution where cations have been filtered or removed.

According to an embodiment, a surface roughness of the glass member 500, 1200, or 1300 may be 5 nm to 40 nm.

According to an embodiment, the temperature of the anionic cleaning solution may be 25 to 95 degrees Celsius.

According to an embodiment, the pH of the anionic cleaning solution may be 7 to 10.

According to an embodiment, the glass member 500, 1200, or 1300 may be configured by an Si-O bond.

According to an embodiment, the glass member 500, 1200, or 1300 may have a thickness of 20 µm to 300 µm.

According to an embodiment, the sludge layer 510, 1210, or 1310 may be cleaned by anions contained in the anionic cleaning solution.

According to an embodiment, the display 1030 may be a flexible display 1030 including a flexible area. The glass member 1200 may be etched so that a thickness T1 of a portion corresponding to the flexible area is smaller than a thickness T2 of a remaining portion in the etching process.

According to an embodiment, the display 1030 may be a flexible display 1030 including a flexible area. The glass member 1300 may be etched so that a plurality of holes or slits (e.g., the slit 1301 of FIG. 13) are formed in a portion corresponding to the flexible area in the etching process.

According to an embodiment, the etching process for etching the glass member 500, 1200, or 1300 may include a chemical etching process.

According to an embodiment, a method for manufacturing a glass member 500, 1200, or 1300 may include etching the glass member 500, 1200, or 1300 using an etching solution. The method for manufacturing the glass member 500, 1200, or 1300 may include rinsing the etching solution remaining on a surface of the glass member 500, 1200, or 1300. The method for manufacturing the glass member 500, 1200, or 1300 may include cleaning a sludge layer 510, 1210, or 1310 including a by-product according to the etching attached to the surface of the glass member 500, 1200, or 1300 by dipping the glass member 500, 1200, or 1300 in an anionic cleaning solution in which cations are filtered or removed.

According to an embodiment, the temperature of the anionic cleaning solution may be between 25 degrees Celsius and 95 degrees Celsius.

According to an embodiment, the glass member 500, 1200, or 1300 may be dipped in the anionic cleaning solution for 10 minutes or longer.

According to an embodiment, the pH of the anionic cleaning solution may be 7 to 10.

According to an embodiment, rinsing may include rinsing the etching solution remaining on the surface of the glass member 500, 1200, or 1300 using distilled water.

According to an embodiment, the cleaning may be an operation in which anions included in the anionic cleaning solution react with the by-product included in the sludge layer 510, 1210, or 1310, thereby cleaning the sludge layer 510, 1210, or 1310.

According to an embodiment, cleaning may include filtering or removing cations from a solution containing cations and anions. Cleaning may include heating the cation-filtered or removed anionic cleaning solution to a predetermined temperature. Cleaning may include supplying the heated anionic cleaning solution for dipping the glass member 500, 1200, or 1300.

According to an embodiment, the method for manufacturing the glass member 500, 1200, or 1300 may include filtering or removing cations from the used cleaning solution used to remove the sludge layer 510, 1210, or 1310. The method for manufacturing the glass member 500, 1200, or 1300 may include heating the anionic cleaning solution produced by filtering or removing the cations of the used cleaning solution to a predetermined temperature. The method for manufacturing the glass member 500, 1200, or 1300 may include re-supplying the heated anionic cleaning solution for dipping the glass member 500, 1200, or 1300.

According to an embodiment, the method may include cooling the used cleaning solution before filtering or removing the cations.

According to an embodiment, an ion exchange resin containing benzenesulfonic acid or dimethylbenzene may be used to filter or remove the cations from the used cleaning solution.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. An electronic device (100, 300, 1000), comprising:
a display (101, 330, 400, 1030); and
a glass member (500, 1200, 1300) on a surface of the electronic device (100, 300, 1000),
wherein a sludge layer (510, 1210, 1310) due to a by-product attached to the surface of the glass member (500, 1200, 1300) is cleaned by an anionic cleaning solution, and
wherein the anionic cleaning solution is a solution in which cations are filtered or removed.

2. The electronic device of claim 1, wherein a surface roughness of the glass member (500, 1200, 1300) is 5 nm to 40 nm.

3. The electronic device of claim 1, wherein a temperature of the anionic cleaning solution is from 25 degrees Celsius to 95 degrees Celsius.

4. The electronic device of claim 1, wherein a pH of the anionic cleaning solution is 7 to 10.

5. The electronic device of claim 1, wherein the glass member (500, 1200, 1300) is configured by an Si-O bond.

6. The electronic device of claim 1, wherein a thickness of the glass member (500, 1200, 1300) is from 20 µm to 300 µm.

7. The electronic device of any one of claims 1 to 6, wherein the display (1030) comprises a flexible area that is flexible, and
wherein the glass member (1200) is etched such that a thickness (T1) of a portion of the glass member corresponding to the flexible area is smaller than a thickness (T2) of a remaining portion other than the flexible area.

8. The electronic device of any one of claims 1 to 6, wherein the display (1030) comprises a flexible area that is flexible, and
wherein the glass member (1300) is etched to form a plurality of holes or slits (1301) in a portion of the glass member corresponding to the flexible area.

9. A method for manufacturing a glass member (500, 1200, 1300), the method comprising:
etching the glass member (500, 1200, 1300) using an etching solution;
rinsing the etching solution remaining on a surface of the glass member (500, 1200, 1300); and
cleaning a sludge layer (510, 1210, 1310) including a by-product from the etching attached to the surface of the glass member (500, 1200, 1300) by dipping the glass member (500, 1200, 1300) in an anionic cleaning solution in which cations are filtered or removed.

10. The method of claim 9, wherein a temperature of the anionic cleaning solution is from 25 degrees Celsius to 95 degrees Celsius.

11. The method of claim 9, wherein the glass member (500, 1200, 1300) is dipped in the anionic cleaning solution for greater than or equal to 10 minutes.

12. The method of claim 9, wherein a pH of the anionic cleaning solution is 7 to 10.

13. The method of claim 9, wherein the rinsing comprises rinsing the etching solution remaining on the surface of the glass member (500, 1200, 1300) by distilled water.

14. The method of any one of claims 9 to 13, wherein the cleaning comprises:
filtering or removing cations from a solution comprising cations and anions;
heating the cation-filtered or removed anionic cleaning solution to a predetermined temperature; and
supplying the heated anionic cleaning solution for dipping the glass member (500, 1200, 1300).

15. The method of any one of claims 9 to 13, further comprising:
cooling the anionic cleaning solution;
filtering or removing the cations in the anionic cleaning solution used to remove the sludge layer (510, 1210, 1310) using an ion exchange resin comprising benzenesulfonic acid or dimethylbenzene;
heating the anionic cleaning solution produced by filtering or removing the cations of the anionic cleaning solution to a predetermined temperature; and
re-supplying the heated anionic cleaning solution for dipping the glass member (500, 1200, 1300).
